# FASCICULE DE BREVET EUROPEEN

(11) **EP 2 483 129 B1**
(45) Date de publication et mention de la délivrance du brevet: **10.08.2016**
(21) Numéro de dépôt: 10776779.0
(22) Date de dépôt: 01.10.2010
(51) Int. Cl.: B62D 1/16, F16B 21/04, B60Q 1/14

(54) **SYSTEME DE FIXATION D'UN MODULE POUR HAUT DE COLONNE DE DIRECTION**
SYSTEM ZUM ANBRINGEN EINES MODULS FÜR DAS OBERTEIL EINER LENKSÄULE
SYSTEM FOR ATTACHING A MODULE FOR THE TOP OF A STEERING COLUMN

(30) Priorité: 02.10.2009 FR 0956886
(43) Date de publication de la demande: 08.08.2012
(73) Titulaire: Renault S.A.S., 92100 Boulogne-Billancourt (FR)
(72) Inventeur: TRITONI, Antoine, F-78160 Marly Le Roi (FR)
(86) Numéro de dépôt international: PCT/FR2010/052082
(87) Numéro de publication internationale: WO 2011/039491

(56) Documents cités:
- EP-A1- 1 319 573
- EP-A1- 1 504 964
- WO-A1-2010/030491
- FR-A1- 2 761 421
- GB-A- 1 506 073

## Description

### DOMAINE DE L'INVENTION

L'invention concerne un système de fixation d'un module pour haut de colonne de direction d'un véhicule automobile, en particulier d'un module portant des commandes du véhicule telles que les commandes d'avertisseur, d'essuie-glace, d'éclairage ou de clignotant.

### TECHNIQUE ANTÉRIEURE

Un tel module est montré par le document EP 1 319 573. Ce module est destiné à être fixé sur un corps de colonne dans lequel un arbre est monté rotatif. L'arbre sert de support au volant de direction pour le véhicule. Sous le volant, le module porte de manière classique des commandes du véhicule telles que les commandes d'essuie-glace, d'éclairage ou de clignotant. Le module comporte un support, réalisé par exemple par moulage de matière synthétique.

Le support comporte un fourreau ayant une forme intérieure sensiblement cylindrique et destinée à être emmanchée sur l'extrémité du corps de colonne. Deux nervures font saillie dans le fourreau et sont destinées à coopérer avec une encoche du corps de colonne afin d'indexer la position du support. Le fourreau comporte deux parties élastiques et une vis de serrage qui permet de rapprocher les deux parties élastiques afin d'obtenir un serrage et donc la fixation du support sur le corps de colonne.

Un tel module présente l'inconvénient de nécessiter un outillage pour la réalisation de sa fixation. De plus, l'accès en particulier à la vis est souvent très exigu, ce qui rend l'opération de fixation malaisée.

Le document WO 2010/030491 divulgue également un système de fixation d'un module de contrôle à un haut de colonne de direction, ledit système comportant un support de commande fixé à un haut de colonne de direction grâce à une bague de serrage.

### OBJECTIFS DE L'INVENTION

L'invention vise à fournir un système de fixation d'un module pour haut de colonne de direction d'un véhicule automobile dont la mise en oeuvre soit aisée et de préférence ne nécessite pas d'outillage.

### EXPOSÉ DE L'INVENTION

Avec ces objectifs en vue, l'invention a pour objet un système de fixation d'un module pour haut de colonne de direction d'un véhicule automobile, le système comportant un corps de colonne de forme tubulaire, un support de module et des moyens de fixation du support sur le corps de colonne. Les moyens de fixation sont agencés pour obtenir la fixation du support sur le corps de colonne par un pivotement du support par rapport au corps de colonne sur une portion de tour entre une position déverrouillée et une position verrouillée.

Compte-tenu des dimensions généralement observées du module, celui-ci est de prise en main aisée et sa manoeuvre de pivotement sur une portion de tour est suffisante pour obtenir une puissance de serrage capable de le maintenir ensuite en position. Il n'est donc plus nécessaire de prévoir un outillage spécifique, ce qui simplifie les opérations de montage et les accélère. L'angle de pivotement est par exemple compris entre 15 et 45°, plus particulièrement 20°.

Selon une disposition constructive, les moyens de fixation comportent une bague interposée entre le corps de colonne et le support. Le pivotement de la bague par rapport à l'un des éléments permet de commander des organes de verrouillage, comme on le verra mieux par la suite.

De manière particulière, la bague est montée pivotante par rapport au support et arrêtée en rotation par rapport au corps de colonne, le système comportant des moyens de serrage du support sur le corps commandés par le pivotement relatif du support et de la bague.

Selon une disposition particulière, les moyens de serrage comportent une rampe sur le support et une patte élastique sur la bague, la rampe agissant sur la patte pour la pousser vers le corps de colonne lors du pivotement du support par rapport à la bague. La patte peut être réalisée facilement de manière indépendante sur la bague qui fournit ainsi un des organes des moyens de serrage. La rampe permet d'exercer une force puissante sur la patte pour l'appuyer contre le corps de colonne. Cet appui supprime les possibilités de jeu entre le support et le corps de colonne.

Selon un perfectionnement, les moyens de serrage comportent un bossage sur la patte et un logement dans le corps de colonne dans lequel le bossage se loge en position verrouillée. On établit ainsi en plus une liaison par obstacle entre le corps de colonne et le support grâce au bossage et au logement.

De manière complémentaire, le système comporte un dispositif d'encliquetage entre la bague et le support pour empêcher le pivotement entre la bague et le support après l'atteinte de la position verrouillée. Par un tel dispositif, le démontage accidentel ne peut pas être obtenu puisque le support ne peut plus pivoter en arrière, et donc ne peut pas déverrouiller sa position.

Par exemple, le dispositif d'encliquetage comporte une languette élastique sur la bague et un logement d'encliquetage dans le support. On obtient ainsi un cliquet dans lequel la languette s'efface pendant le pivotement vers la position verrouillée et prend position dans le logement lorsque la position verrouillée est atteinte. Lors d'une tentative de pivotement en arrière, la languette viendra en butée contre une paroi du logement et empêchera le pivotement.

Selon une disposition constructive, les moyens d'arrêt en rotation de la bague par rapport au corps de colonne comportent au moins une rainure longitudinale sur le corps de colonne coopérant avec une nervure de la bague. Cette forme permet d'arrêter la bague en rotation tout en permettant son indexation et son introduction par coulissement sur le corps de colonne.

Selon l'invention le support comporte au moins un ergot faisant saillie vers le corps de colonne, et coopérant avec une portion de rainure circulaire du corps de colonne pour empêcher le coulissement du support sur le corps de colonne en position verrouillée. Le pivotement du support de la position déverrouillée vers la position verrouillée permet d'engager l'ergot dans la rainure circulaire. Une fois dans cette position, l'ergot réalise un arrêt en coulissement du support par rapport au corps de colonne. Par ailleurs, le fond de la rainure permet aussi de réaliser une butée coopérant avec l'ergot pour limiter le pivotement à la position verrouillée.

Selon l'invention la portion de rainure circulaire prolonge la rainure longitudinale. La rainure longitudinale sert alors de passage pour l'ergot pendant l'introduction du support sur le corps de colonne par coulissement dans le sens axial.

### BRÈVE DESCRIPTION DES FIGURES

L'invention sera mieux comprise et d'autres particularités et avantages apparaîtront à la lecture de la description qui va suivre, la description faisant référence aux dessins annexés parmi lesquels :
la figure 1 est une vue en perspective d'un système conforme à l'invention dans une position déverrouillée ;
la figure est une vue similaire à la figure 1 dans une position déverrouillée ;
la figure 3 est une vue du système en position verrouillée en coupe dans un plan axial selon la ligne III-III de la figure 4 ;
la figure 4 est une vue en coupe dans un plan radial selon la ligne IV-IV de la figure 3 ;
la figure 5 est une vue similaire à la figure 4 du système en position déverrouillée ;
la figure 6 est une vue en perspective du corps de colonne seul du système de la figure 1.

### DESCRIPTION DETAILLÉE

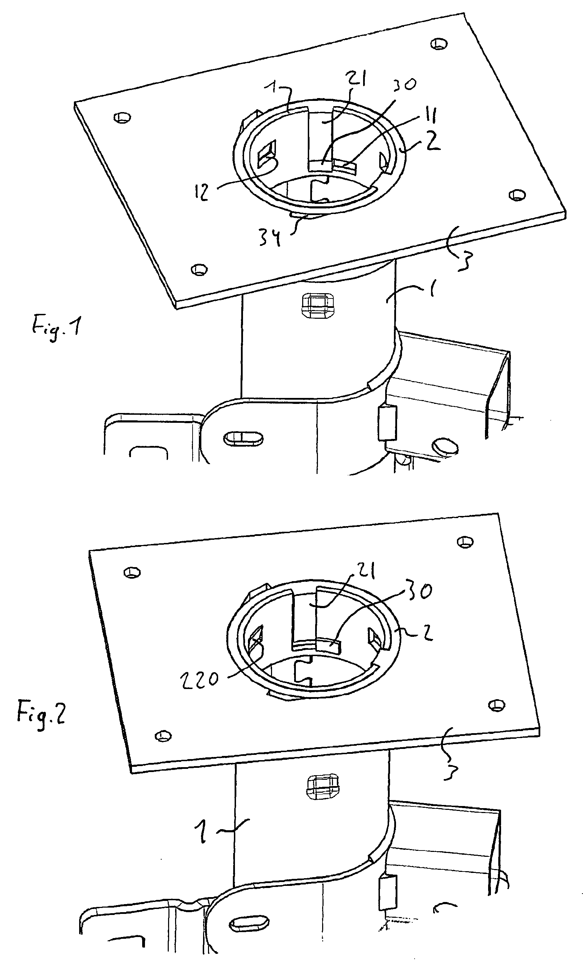

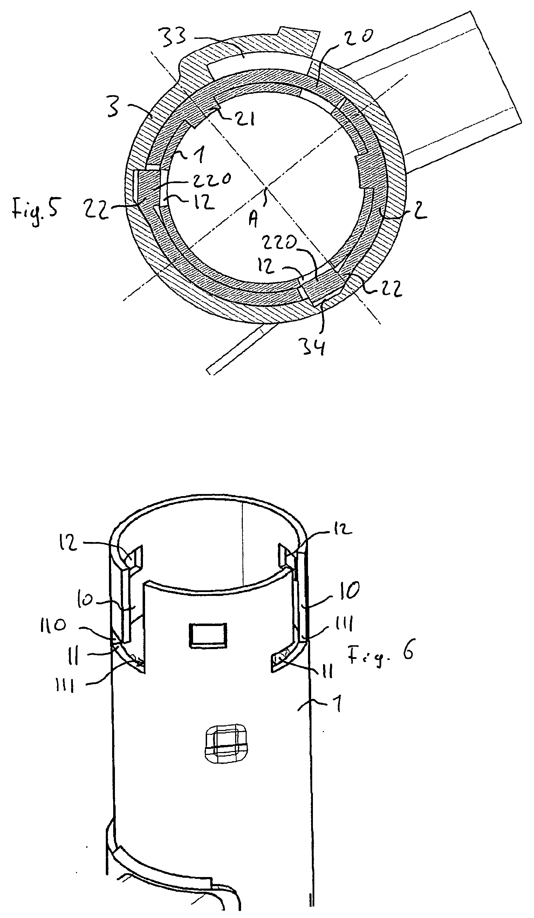

Un système de fixation d'un module pour haut de colonne de direction d'un véhicule automobile conforme à l'invention est représenté sur les figures 1 à 6. Le système comporte un corps de colonne 1 de forme tubulaire qui fait partie d'une colonne de direction. Un arbre de colonne est logé dans le corps de colonne 1 et monté rotatif selon un axe de colonne, mais n'est pas représenté sur les figures. L'arbre de colonne fait saillie hors du corps de colonne 1 par l'extrémité représentée sur la figure 6 et reçoit un volant de direction, non représenté, d'une manière connue en soi.

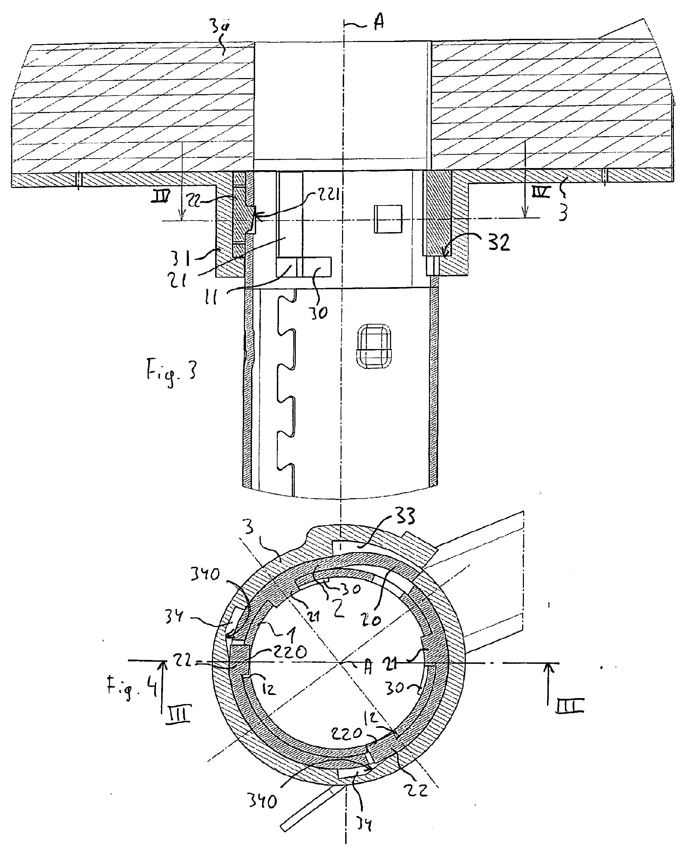

Un module pour haut de colonne comporte un support 3 de module et un boîtier 3a représenté de manière schématique sur la figure 3 par un bloc hachuré. Sur les figures 1 et 2, seul le support 3 du module est représenté. Le module porte divers accessoires classiques, non représentés, tels que des commandes d'essuie-glace et d'éclairage. Des moyens de fixation du support 3 sur le corps de colonne 1 sont prévus.

Les moyens de fixation comportent un fourreau faisant partie du support 3, de forme sensiblement cylindrique et entourant l'extrémité du corps de colonne 1. Le fourreau 31 fait saillie du support 3 qui a une forme sensiblement plane. Cette pièce est obtenue par exemple par moulage par injection de matière synthétique. Une bague 2, également en matière synthétique, est interposée entre le corps de colonne 1 et le fourreau 31. La bague 2 est montée pivotante dans le fourreau 31. Elle est arrêtée en coulissement d'une part par un épaulement du fourreau 31, et d'autre part par le boîtier 3a du module, rapporté sur le support 3 après le montage de la bague 2 dans le fourreau 31.

La bague 2 est arrêtée en rotation par rapport au corps de colonne 1 par deux nervures 21 parallèles à l'axe de colonne A coopérant avec deux rainures 10 débouchant à l'extrémité du corps de colonne 1. Les nervures sont réparties de manière non symétrique, de manière à créer un détrompage dans l'orientation angulaire de la bague 2 sur le corps de colonne 1.

Le système est prévu pour permettre un pivotement d'environ 20° du support 3 par rapport au corps de colonne 1 selon l'axe de colonne A entre une position déverrouillée et une position verrouillée. Pour cela, le support 3 comporte deux ergots 30 faisant saillie depuis l'épaulement 32 vers le corps de colonne 1, et coopérant avec des portions de rainure circulaire 11 du corps de colonne 1. Les portions de rainure circulaire 11 prolongent les rainures 10 longitudinales à la manière d'un système à baïonnette. Les ergots 30 sont destinés d'une part à limiter le pivotement sur 20° par la butée des ergots 30 aux extrémités 110, 111 des portions de rainure circulaire 11, et d'autre part à empêcher le coulissement du support 3 sur le corps de colonne 1 lorsque la position verrouillée est atteinte.

Par ailleurs, le système comporte des moyens de serrage du support 3 sur le corps commandés par le pivotement relatif du support 3 et de la bague 2. Les moyens de serrage comportent deux pattes 22 élastiques délimitées dans la paroi de la bague 2. Chaque patte 22 comporte un bossage 220 faisant saillie côté intérieur de la bague 2, donc vers le corps de colonne 1. Une découpe 12 est prévue dans la paroi du corps de colonne 1 en regard de chaque bossage 220 en position verrouillée. Cette découpe 12 forme un logement pour le bossage 220. D'autre part, le support 3 comporte des rainures longitudinales 34 en regard des pattes 22. Le bord des rainures est en forme de rampe 340. Les pattes 22 peuvent se loger dans les rainures longitudinales 34 lorsque le système est en position déverrouillée, comme montré sur la figure 5. Cependant, chaque rampe 340 agit sur la patte 22 correspondante pour la pousser vers le corps de colonne 1 lors du pivotement du support 3 par rapport à la bague 2 afin de loger le bossage 220 dans la découpe 12. Chaque bossage 220 comporte en outre une rampe 340 de bossage 221 pour écarter la patte 22 vers l'extérieur lors de l'introduction de la bague 2 sur l'extrémité du corps de colonne 1.

Le système comporte en outre un dispositif d'encliquetage entre la bague 2 et le support 3 pour empêcher le pivotement entre la bague 2 et le support 3 après l'atteinte de la position verrouillée. Ledit dispositif d'encliquetage comporte une languette 20 élastique sur la bague 2 faisant saillie élastiquement vers l'extérieur de la bague 2. Il comporte en outre un logement d'encliquetage 33 dans le support 3, dans lequel la languette 20 vient se loger lorsque la position verrouillée est atteinte.

Pour réaliser le montage du support 3 sur le corps de colonne 1, la bague 2 est d'abord mise en place dans le fourreau 31 et y est emprisonnée par le boîtier 3a. Les nervures 21 de la bague 2 sont alignées avec les ergots 30 du support 3. Les pattes 22 peuvent se loger dans les rainures longitudinales 34 du support 3. La languette 20 est repliée et en appui contre la surface intérieure 310 du fourreau 31, comme montré sur la figure 5.

Cet ensemble est alors emmanché sur le corps de colonne 1, en glissant les ergots 30 puis les nervures 21 dans les rainures longitudinales 34 du corps de colonne 1. Les rampes de bossage 221 glissent sur les bords du corps de colonne 1 et poussent les pattes 22 dans les rainures longitudinales 34 du support 3. On atteint alors la position déverrouillée telle que représentée sur les figures 1 et 5.

Puis on pivote le support 3 d'environ 20°. Pendant ce pivotement, les rampes 340 des rainures longitudinales 34 du support 3 forcent les pattes 22 vers l'intérieur, ce qui permet d'introduire en force les bossages 220 dans les découpes 12. Dans le même temps, les ergots 30 s'introduisent dans les portions de rainure circulaire 11. Au final, la languette 20 arrive dans le logement d'encliquetage 33 et s'y place de manière élastique. On atteint alors la position verrouillée. La languette 20, en faisant butée contre la paroi du logement d'encliquetage 33, s'oppose au retour vers la position déverrouillée. On obtient ainsi la fixation du support 3 sur le corps de colonne 1 par un pivotement du support 3 par rapport au corps de colonne 1 sur une portion de tour entre une position déverrouillée et une position verrouillée.

L'invention n'est pas limitée au mode de réalisation décrit uniquement à titre d'exemple. On peut prévoir un bouton pour pouvoir appuyer sur la languette 20 et obtenir le déverrouillage. Le nombre de rainures 10 dans le corps ou de pattes 22 dans la bague 2 est déterminé en fonction des contraintes mécaniques.

## Revendications

1. Système de fixation d'un module pour haut de colonne de direction d'un véhicule automobile, le système comportant un corps de colonne (1) de forme tubulaire, un support (3) du module et des moyens de fixation (31, 2) du support (3) sur le corps de colonne (1),
- les moyens de fixation (31,2) étant agencés pour obtenir la fixation du support (3) sur le corps de colonne (1) par un pivotement du support (3) par rapport au corps de colonne (1) sur une portion de tour entre une position déverrouillée et une position verrouillée,
- les moyens de fixation comportant une bague (2) interposée entre le corps de colonne (1) et le support (3), la bague (2) étant montée pivotante par rapport au support (3) et arrêtée en rotation par rapport au corps de colonne (1), le système comportant des moyens de serrage (22, 340) du support (3) sur le corps de colonne commandés par le pivotement relatif du support (3) et de la bague (2)
**caractérisé en ce que** le support (3) comporte au moins un ergot (30) faisant saillie vers le corps de colonne (1), et coopérant avec une portion de rainure circulaire (11) du corps de colonne (1) prolongeant une rainure longitudinale (10) sur ledit corps, pour empêcher le coulissement du support (3) sur le corps de colonne (1) en position verrouillée.

2. Système selon la revendication 1, dans lequel les moyens de serrage comportent une rampe (340) sur le support (3) et une patte (22) élastique sur la bague (2), la rampe (340) agissant sur la patte (22) pour la pousser vers le corps de colonne (1) lors du pivotement du support (3) par rapport à la bague (2).

3. Système selon la revendication 2, dans lequel les moyens de serrage comportent un bossage (220) sur la patte (22) et un logement (12) dans le corps de colonne (1) dans lequel le bossage (220) se loge en position verrouillée.

4. Système selon la revendication 1, **caractérisé en ce qu'**il comporte un dispositif d'encliquetage (20, 33) entre la bague (2) et le support (3) pour empêcher le pivotement entre la bague (2) et le support (3) après l'atteinte de la position verrouillée.

5. Système selon la revendication 4, dans lequel le dispositif d'encliquetage comporte une languette (20) élastique sur la bague (2) et un logement d'encliquetage (33) dans le support (3).

6. Système selon la revendication 1, dans lequel les moyens d'arrêt en rotation de la bague (2) par rapport au corps de colonne (1) comportent au moins la rainure (10) longitudinale sur le corps de colonne (1) coopérant avec une nervure (21) de la bague (2).

## Patentansprüche

1. System zur Befestigung eines Moduls für ein Lenksäulenoberteil eines Kraftfahrzeugs, wobei das System einen rohrförmigen Säulenkörper (1), einen Träger (3) des Moduls und Mittel (31, 2) zur Befestigung des Trägers (3) am Säulenkörper (1) aufweist,
- wobei die Befestigungsmittel (31, 2) ausgebildet sind, um die Befestigung des Trägers (3) am Säulenkörper (1) durch ein Schwenken des Trägers (3) bezogen auf den Säulenkörper (1) in einem Umdrehungsabschnitt zwischen einer entriegelten Position und einer verriegelten Position zu erzielen,
- wobei die Befestigungsmittel einen Ring (2), der zwischen dem Säulenkörper (1) und dem Träger (3) eingefügt ist, aufweisen, wobei der Ring (2) bezogen auf den Träger (3) schwenkbar angebracht ist und bezogen auf den Säulenkörper (1) gegen Drehung festgestellt ist, wobei das System Mittel (22, 340) zum Spannen des Trägers (3) am Säulenkörper, die durch das relative Schwenken des Trägers (3) und des Rings (2) betätigt werden, aufweist,
**dadurch gekennzeichnet, dass** der Träger (3) mindestens einen Ansatz (30), der zum Säulenkörper (1) hin hervorsteht und der mit einem kreisförmigen Nutabschnitt (11) des Säulenkörpers (1), der eine Längsnut (10) am Körper verlängert, zusammenwirkt, um die Verschiebung des Trägers (3) am Säulenkörper (1) in verriegelter Position zu verhindern.

2. System nach Anspruch 1, bei dem die Spannmittel eine Rampe (340) am Träger (3) und einen elastischen Steg (22) am Ring (2) aufweisen, wobei die Rampe (340) auf den Steg (22) einwirkt, um ihn beim Schwenken des Trägers (3) bezogen auf den Ring (2) zum Säulenkörper (1) hin zu drücken.

3. System nach Anspruch 2, bei dem die Spannmittel eine Wölbung (220) am Steg (22) und eine Aufnahme (12) im Säulenkörper (1), in der die Wölbung (220) in verriegelter Position aufgenommen ist, aufweisen.

4. System nach Anspruch 1, **dadurch gekennzeichnet, dass** es eine Einrastvorrichtung (20, 33) zwischen dem Ring (2) und dem Träger (3) aufweist, um das Schwenken zwischen dem Ring (2) und dem Träger (3) nach dem Erreichen der verriegelten Position zu verhindern.

5. System nach Anspruch 4, bei dem die Einrastvorrichtung eine elastische Zunge (20) am Ring (2) und eine Einrastaufnahme (33) im Träger (3) aufweist.

6. System nach Anspruch 1, bei dem die Mittel zum Feststellen gegen Drehung des Rings (2) bezogen auf den Säulenkörper (1) mindestens die Längsnut (10) am Säulenkörper (1), die mit einer Rippe (21) des Rings (2) zusammenwirkt, aufweisen.

## Claims

1. System for fastening a module for the top of a motor vehicle steering column, the system comprising a column body (1) of tubular shape, a module support (3) and means (31, 2) for fastening the support (3) to the column body (1),
- the fastening means (31, 2) being arranged so as to obtain fastening of the support (3) to the column body (1) by pivoting the support (3) with respect to the column body (1) through a portion of a turn between an unlocked position and a locked position,
- the fastening means comprising a ring (2) interposed between the column body (1) and the support (3), the ring (2) being pivotably mounted with respect to the support (3) and blocked in rotation with respect to the column body (1), the system comprising means (22, 340) for clamping the support (3) on the column body that are controlled by the relative pivoting of the support (3) and the ring (2),
**characterized in that** the support (3) comprises at least one lug (30) projecting towards the column body (1) and cooperating with a circular slot portion (11) in the column body (1) that extends a longitudinal slot (10) in said body, in order to prevent the support (3) from sliding on the column body (1) in the locked position.

2. System according to Claim 1, in which the clamping means comprise a ramp (340) on the support (3) and an elastic tab (22) on the ring (2), the ramp (340) acting on the tab (22) in order to push it towards the column body (1) when the support (3) is pivoted with respect to the ring (2).

3. System according to Claim 2, in which the clamping means comprise a boss (220) on the tab (22) and a housing (12) in the column body (1) in which the boss (220) is housed in the locked position.

4. System according to Claim 1, **characterized in that** it comprises a device (20, 33) for snap-fastening between the ring (2) and the support (3) in order to prevent pivoting between the ring (2) and the support (3) after the locked position has been reached.

5. System according to Claim 4, in which the snap-fastening device comprises an elastic tongue (20) on the ring (2) and a snap-fastening housing (33) in the support (3).

6. System according to Claim 1, in which the means for blocking rotation of the ring (2) with respect to the column body (1) comprise at least the longitudinal slot (10) in the column body (1) cooperating with a rib (21) of the ring (2).
